# EUROPEAN PATENT APPLICATION

(11) **EP 2 868 562 A1**
(43) Date of publication of application: **06.05.2015**
(21) Application number: 13808576.6
(22) Date of filing: 25.06.2013
(51) Int. Cl.: B62M 6/45, B62M 6/90

(54) **CONTROL DEVICE OF AUXILIARY-POWERED MOVEMENT DEVICE, AND AUXILIARY-POWERED MOVEMENT DEVICE COMPRISING SAID CONTROL DEVICE**

(30) Priority: 28.06.2012 JP 2012144946; 30.08.2012 JP 2012190545
(71) Applicant: Murata Manufacturing Co., Ltd., Nagaokakyo-shi, Kyoto 617-8555 (JP)
(72) Inventor: TANAKA, Hidehiko, Nagaokakyo-shi Kyoto 617-8555 (JP); YAMAOKA, Haruaki, Nagaokakyo-shi Kyoto 617-8555 (JP); YAMAGATA, Yuki, Nagaokakyo-shi Kyoto 617-8555 (JP); MATSUDA, Seigo, Nagaokakyo-shi Kyoto 617-8555 (JP)
(74) Representative: Zinnecker, Armin
(86) International application number: PCT/JP2013/067410
(87) International publication number: WO 2014/003017

(57) **Abstract**

A controlling device for a power-assisted mobile apparatus that can be controlled with ease and that can increase the ratio of the duration of a regenerative state and a power-assisted mobile apparatus including the controlling device are provided.

A controlling device 20 includes a speed sensor 26 that detects the speed of a power-assisted bicycle, an acceleration sensor 27 that detects the acceleration, and a regeneration controlling circuit that switches a state of a motor 42 and a battery 44 of the power-assisted bicycle to one of an assisted state and a regenerative state on the basis of the speed detected by the speed sensor 26 and the acceleration detected by the acceleration sensor 27. A controller 22 of the regeneration controlling circuit has a regeneration determining value for the acceleration of the power-assisted bicycle stored in advance in accordance with the speed of the power-assisted bicycle, and switches the state of the motor 42 and the battery 44 to the regenerative state in a case in which the acceleration detected by the acceleration sensor 27 at a given speed is equal to or greater than the regeneration determining value.

## Description

### Technical Field

The present invention relates to controlling devices for power-assisted mobile apparatuses, such as a power-assisted bicycle, and to power-assisted mobile apparatuses provided with the controlling devices.

### Background Art

To date, known controlling devices for power-assisted bicycles include the one described in Patent Document 1. This controlling device for the power-assisted bicycle is primarily for switching between a regenerative state and an assisted state and carries out such control by detecting the vehicle speed and the treading torque. In other words, driving of a motor of the power-assisted bicycle is controlled so that the motor is assisted in order to generate assist force in accordance with the treading torque applied to the crankshaft of the power-assisted bicycle, and the direct current motor and the battery are switched to the regenerative state in a case in which the detected treading torque is less than the treading torque determined in accordance with the vehicle speed.

### Citation List

### Patent Document

Patent Document 1: Japanese Unexamined Patent Application Publication No. 9-267790

### Summary of Invention

### Technical Problem

However, the existing controlling device for the power-assisted bicycle carries out control by detecting the vehicle speed and the treading torque, and thus the controlling device needs to carry out the control by detecting the vehicle speed and the treading torque each time the gear of the power-assisted bicycle is switched, which leads to a problem in that the control becomes complicated.

In addition, even in a case in which the acceleration is large, if the treading torque is large, switching to the regenerative state does not occur, and thus the ratio of the duration of the regenerative state is small, which leads to a problem in that the frequency at which the battery goes down or at which the battery needs charging increases.

Accordingly, the present invention is directed to providing a controlling device for a power-assisted mobile apparatus that can be controlled with ease and that can increase the ratio of the duration of a regenerative state, and a power-assisted mobile apparatus provided with the controlling device.

### Solution to Problem

The present invention is a controlling device for a power-assisted mobile apparatus that includes a motor and a battery for generating assist force, and the controlling device includes an acceleration detecting unit configured to detect acceleration of the power-assisted mobile apparatus, and a regeneration controlling unit configured to switch a state of the motor and the battery to one of an assisted state, a regenerative state, and a neutral state on the basis of the acceleration detected by the acceleration detecting unit. The regeneration controlling unit switches the state of the motor and the battery to the regenerative state in a case in which the acceleration detected by the acceleration detecting unit is equal to or greater than a regeneration determining value.

In addition, it is preferable that the present invention include a speed detecting unit configured to detect a speed of the power-assisted mobile apparatus, and that the regeneration controlling unit have a regeneration determining value for the acceleration of the power-assisted mobile apparatus stored in advance in accordance with the speed of the power-assisted mobile apparatus, and switch the state of the motor and the battery to the regenerative state in a case in which the acceleration detected by the acceleration detecting unit at a given speed is equal to or greater than the regeneration determining value.

Furthermore, the present invention is a controlling device for a power-assisted mobile apparatus that includes a motor and a battery for generating assist force, and the controlling device includes a speed detecting unit configured to detect a speed of the power-assisted mobile apparatus, an acceleration detecting unit configured to detect acceleration of the power-assisted mobile apparatus, and a regeneration controlling unit configured to switch a state of the motor and the battery to one of an assisted state, a regenerative state, and a neutral state on the basis of the speed detected by the speed detecting unit and the acceleration detected by the acceleration detecting unit. The regeneration controlling unit has a regeneration determining value for the acceleration of the power-assisted mobile apparatus stored in advance in accordance with the speed of the power-assisted mobile apparatus, and switch the state of the motor and the battery to the regenerative state in a case in which the acceleration detected by the acceleration detecting unit at a given speed is equal to or greater than the regeneration determining value.

In the present invention, control is carried out by detecting the speed and the acceleration of the power-assisted mobile apparatus, which suppresses the influence of a gear change or the like of the power-assisted mobile apparatus, and thus the control of switching between the assisted state and the regenerative state can be simplified.

In addition, it is preferable that, in the controlling device for the power-assisted mobile apparatus of the present invention, the speed of the power-assisted mobile apparatus include a first speed range that ranges from at least 0 km/h to a first threshold speed, a second speed range that ranges from the first threshold speed to a second threshold speed, and a third speed range that exceeds the second threshold speed, and that the second speed range be divided into two ranges of a low speed range and a high speed range. In addition, it is preferable that the regeneration controlling unit have a first regeneration determining value having a positive threshold value for the acceleration of the power-assisted mobile apparatus stored in advance for the low speed range of the power-assisted mobile apparatus, switch the state of the motor and the battery to the regenerative state in a case in which the acceleration detected by the acceleration detecting unit at a speed in the low speed range is equal to or greater than the first regeneration determining value, and switch the state of the motor and the battery to the assisted state in a case in which the acceleration is less than the first regeneration determining value. Furthermore, it is preferable that the regeneration controlling unit have a second regeneration determining value having a negative threshold value for the acceleration of the power-assisted mobile apparatus stored in advance for the high speed range of the power-assisted mobile apparatus, switch the state of the motor and the battery to the regenerative state in a case in which the acceleration detected by the acceleration detecting unit at a speed in the high speed range is equal to or greater than the second regeneration determining value, and switch the state of the motor and the battery to the neutral state in a case in which the acceleration is less than the second regeneration determining value.

In addition, in the controlling device for the power-assisted mobile apparatus of the present invention, it is preferable that the regeneration determining value can be set such that a total amount of change in the battery along the entire traveling process is equal to or greater than 0. The entire traveling process is a concept that includes a predetermined traveling route starting from a given point and returning to the given point, and a running mode (the number of temporary stops, the number of restarts, accelerating segments, steady traveling segments, and decelerating segments) in the predetermined traveling route.

In this case, the ratio of the regenerative state relative to the entire traveling process increases, and the charging frequency decreases in turn, which leads to extended battery life. As a result, the frequency at which the battery is removed decreases, which saves the user the trouble of removing the battery and also allows the life of the connector for connecting the battery to be extended. In addition, the risk of the battery going down is reduced as well.

In addition, it is preferable that the controlling device for the power-assisted mobile apparatus of the present invention be provided with a battery cell of which an output current of the battery of the power-assisted mobile apparatus is 15 A or greater.

In this case, a high-output battery can be mounted, and the number of battery cells is reduced. Thus, the cost of manufacturing the power-assisted mobile apparatus and the weight of the power-assisted mobile apparatus can be reduced, and the charging efficiency of the battery improves as well.

In addition, the present invention is a power-assisted mobile apparatus that includes the above-described controlling device for the power-assisted mobile apparatus.

### Advantageous Effects of Invention

According to the present invention, a controlling device for a power-assisted mobile apparatus that can be controlled with ease and that can increase the ratio of the duration of a regenerative state and a power-assisted mobile apparatus provided with the controlling device can be obtained.

The aforementioned object of the invention, additional objects, features, and advantages will become apparent from the description of the embodiments for embodying the invention provided hereinafter with reference to the drawings.

### Brief Description of Drawings

[Fig. 1] Fig. 1 is a side view illustrating an example of a power-assisted mobile apparatus according to the present invention.
[Fig. 2] Fig. 2 is a block diagram illustrating an embodiment of a controlling device for a power-assisted mobile apparatus according to the present invention.

### Description of Embodiments

### (Power-Assisted Mobile Apparatus)

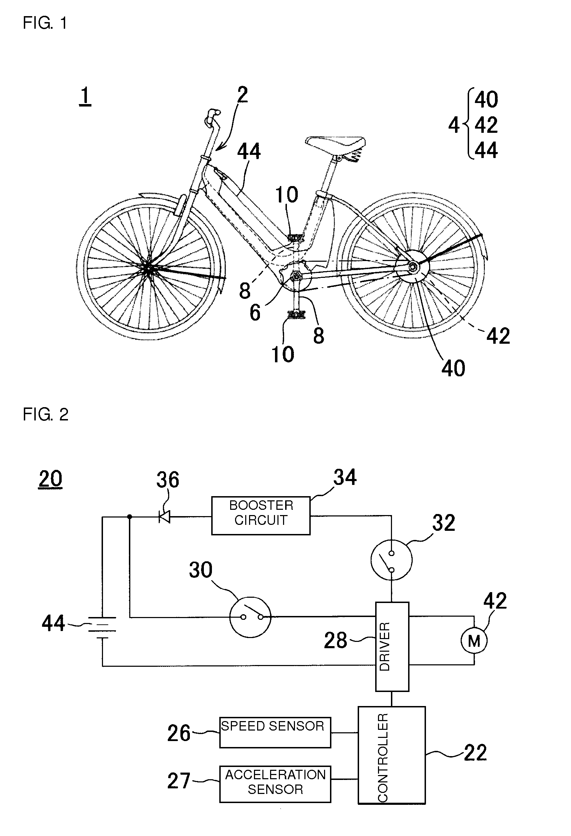

Fig. 1 is a side view of a power-assisted bicycle, which is an example of a power-assisted mobile apparatus. Although the following description illustrates a power-assisted bicycle as an example, the present invention is not limited to such an example, and can also be applied, for example, to a power-assisted stroller, a power-assisted rickshaw, a power-assisted wheelchair, a power-assisted cart, and so on.

A power-assisted bicycle 1 roughly includes a bicycle body 2, an auxiliary power unit 4 integrated into the bicycle body 2, a crankshaft 6, pedal arms 8 attached to the crankshaft 6, and pedals 10 rotatably attached to the leading ends of the respective pedal arms 8.

The auxiliary power unit 4 roughly includes an auxiliary power unit cover 40, a direct current motor 42 housed in the auxiliary power unit cover 40, a battery 44, and a controlling device 20 (not illustrated in Fig. 1). The direct current motor 42 housed in the auxiliary power unit cover 40 is mounted at the rear wheel side. In addition, while the battery 44 is mounted along a seat pillar for supporting a saddle at a lower side of the saddle, the battery 44 may be mounted at any location on the power-assisted bicycle 1 as long as the battery 44 does not become an obstacle while the power-assisted bicycle 1 travels. The battery 44 according to the present embodiment is mounted along a frame formed so as to extend between the vicinity of the crankshaft 6 of the power-assisted bicycle 1 and the handlebars.

### (Controlling Device for Power-Assisted Mobile Apparatus)

Fig. 2 is a block diagram illustrating an embodiment of the controlling device for the power-assisted mobile apparatus.

The controlling device 20 roughly includes a controller 22, a speed sensor 26, an acceleration sensor 27, a driver 28, an assist switch 30, a regenerative switch 32, a booster circuit 34, and a countercurrent prevention diode 36.

The speed sensor 26 can detect the speed of the power-assisted bicycle 1. The acceleration sensor 27 can detect the acceleration of the power-assisted bicycle 1. As a method for detecting the acceleration, the acceleration may be calculated on the basis of the speed detected by the speed sensor 26, without the acceleration sensor 27 provided separately.

The controller 22 outputs a control signal to the driver 28 on the basis of input signals from the speed sensor 26 and the acceleration sensor 27. The controller 22 can switch the state of the direct current motor 42 and the battery 44 to one of an assisted state, a regenerative state, and a neutral state on the basis of the speed detected by the speed sensor 26 and the acceleration detected by the acceleration sensor 27.

The controller 22 has a control program stored therein, and a regeneration determining value for the acceleration of the power-assisted bicycle 1 is set in advance in the control program in accordance with the speed of the power-assisted bicycle 1. If the acceleration detected by the acceleration sensor 27 at a given speed is equal to or greater than the regeneration determining value, the controller 22 switches the state of the direct current motor 42 and the battery 44 to the regenerative state. In the stated control program, for example, a plurality of speed ranges are set in advance, and regeneration determining values are set for the respective ranges.

The driver 28 drives the direct current motor 42 on the basis of a control signal from the controller 22.

Electric power in the battery 44 is supplied to the direct current motor 42 through the driver 28. The assist switch 30 is provided in this electric power supplying circuit.

A regenerative circuit in which the regenerative switch 32, the booster circuit 34, and the countercurrent prevention diode 36 are connected in series is provided between the battery 44 and the driver 28. The regenerative switch 32 is controlled by the controller 22.

The regenerative switch 32 is normally in an OFF state. Turning on the assist switch 30 leads to a state (assisted state) in which electric power in the battery 44 can be supplied to the direct current motor 42 through the driver 28.

Then, if the controller 22 determines, on the basis of a speed signal from the speed sensor 26 and an acceleration signal from the acceleration sensor 27, that the acceleration is less than the regeneration determining value for the acceleration stored in advance in accordance with the speed of the power-assisted bicycle 1, the controller 22 determines the traveling state of the power-assisted bicycle 1 on the basis of the speed signal and the acceleration signal. On the basis of the determined traveling state, the controller 22 controls and supplies electric power from the battery 44 to the direct current motor 42 and drives the direct current motor 42 so as to output assist force in order to assist the human power at a predetermined ratio. At this point, depending on the traveling state, the assist force may not be outputted on the basis of a determination that it is not necessary to assist the human power.

Meanwhile, in a given traveling state, if the controller 22 determines, on the basis of a speed signal from the speed sensor 26 and an acceleration signal from the acceleration sensor 27, that the acceleration is equal to or greater than the regeneration determining value for the acceleration stored in advance in accordance with the speed of the power-assisted bicycle 1, the controller 22 puts the direct current motor 42 and the battery 44 into the regenerative state. In other words, the controller 22 outputs a control signal to the driver 28 so as to stop electric power from being supplied to the direct current motor 42 and to cause the direct current motor 42 to operate as a generator instead. The controller 22 then turns ON the regenerative switch 32 so as to regenerate the electric power generated in the direct current motor 42 to the battery 44 through the regenerative circuit.

Here, the electric power generated by the direct current motor 42 has its voltage boosted by the booster circuit 34 so as to exceed a predetermined output voltage of the battery 44 and is then returned to the battery 44.

The controlling device 20 configured as described above carries out control on the basis of the speed and the acceleration, instead of the speed and the treading torque as in the existing technique, and is thus not affected by a gear change. Therefore, the control program for switching between the assisted state and the regenerative state can be simplified. Then, even in a case in which the speed of the power-assisted bicycle 1 is low and the treading torque is large, if the acceleration is large, the control program switches to the regenerative state, and thus the frequency of switching to the regenerative state increases. Therefore, a situation where the battery goes down can be suppressed, and the charging frequency can be reduced.

In addition, the direct current motor 42 of the power-assisted bicycle 1 requires a current of approximately 30 A for driving. With a priority placed on the battery capacity, an existing battery is typically formed by connecting three battery cells (e.g., each obtained by connecting seven single cells in series) each having an output current of approximately 10 A in parallel so as to increase the capacity per battery cell.

In the present embodiment, however, the frequency of switching to the regenerative state increases, and thus it is not necessary to place a priority on the battery capacity. Therefore, the battery 44 can be formed by connecting two battery cells each having an output current of 15 A or greater in parallel.

Such a configuration reduces the number of battery cells; thus, the cost of manufacturing the battery 44 is reduced by one third, and the weight of the battery 44 is also reduced approximately by one fourth. As a result, the cost of manufacturing the power-assisted bicycle 1 and the weight of the power-assisted bicycle 1 can be reduced, and the charging efficiency of the battery 44 improves as well.

In addition, as the control program for the controller 22 of the controlling device 20 is set such that the ratio of the duration of the regenerative state is equal to or greater than 15% of the total duration obtained by adding the duration of the assisted state and the duration of the regenerative state, switching to the regenerative state occurs frequently. As a result, a situation where the battery goes down can be further suppressed, and the charging frequency can be expected to be further reduced.

Furthermore, in the control program for the controller 22 of the controlling device 20, for example, the regeneration determining value can be set such that the total amount of change in the battery along the entire traveling process including an outbound path and a return path is equal to or greater than 0. Here, the entire traveling process is a concept that includes a predetermined running route starting from a given point and returning to the given point, and a running mode (the number of temporary stops, the number of restarts, accelerating segments, steady traveling segments, and decelerating segments) in the predetermined running route.

Such a control program makes it possible to carry out control such that the ratio of the duration of the regenerative state increases. In this case, for example, such control may be implemented by recording a traveling state in an outbound path (e.g., information on the distance of the outbound path, information on the time at which the control program in which the regeneration determining value corresponding to each speed range is set is executed in the outbound path, and so on) and feeding back the recorded information on the traveling state in the outbound path during a return path. As a result, a situation where the battery goes down can be further suppressed, and the charging frequency can be expected to be further reduced.

### Embodiments

### 1. Embodiment 1 through Embodiment 3 and Comparative Examples 1 and 2

### (Controlling Device of Embodiments)

The controller 22 of the controlling device 20 according to Embodiment 1 through Embodiment 3 has a control program as indicated in Table 1 stored therein, and the regeneration determining value for the acceleration of the power-assisted bicycle 1 is set in advance in the control program in accordance with the speed of the power-assisted bicycle 1.

**[Table 1]**

| Program No. | Speed (km/h) | Acceleration (m/s²) | | | State |
|---|---|---|---|---|---|
| | | Embodiment 1 | Embodiment 2 | Embodiment 3 | |
| 1 | 0 to less than 10 | * | * | * | Assisted |
| 2 | 10 or greater to less than 24 | Less than 0 | Less than -1 | Less than -3 | Assisted |
| 3 | | 0 or greater | -1 or greater | -3 or greater | Regenerative |
| 4 | 24 or greater | Less than -2 | Less than -3 | Less than -5 | × |
| 5 | | -2 or greater | -3 or greater | -5 or greater | Regenerative |

In Table 1, the controller 22 of Embodiment 1 stores Program No. 1 through Program No. 5. The controlling device 20 of Embodiment 1 applies Program No. 1 in a case in which the speed of the power-assisted bicycle 1 is at a low speed of 0 to less than 10 km/h and puts the direct current motor 42 and the battery 44 into the assisted state regardless of the acceleration.

In addition, in the controlling device 20 of Embodiment 1, the regeneration determining value for the acceleration is set to 0 m/s² while the speed is at a medium speed of 10 km/h or greater to less than 24 km/h. In other words, in a case in which the acceleration is less than 0 m/s², the controlling device 20 applies Program No. 2 and puts the direct current motor 42 and the battery 44 into the assisted state. In a case in which the acceleration is 0 m/s² or greater, the controlling device 20 applies Program No. 3 and puts the direct current motor 42 and the battery 44 into the regenerative state on the basis of a determination that the rider has enough stamina left.

Furthermore, in the controlling device 20 of Embodiment 1, the regeneration determining value for the acceleration is set to -2 m/s² while the speed is at a high speed of 24 km/h or greater. In other words, in a case in which the acceleration is less than -2 m/s², the controlling device 20 applies Program No. 4 and puts the direct current motor 42 and the battery 44 into the neutral state, and that state is indicated by "x". In a case in which the acceleration is -2 m/s² or greater, the controlling device 20 applies Program No. 5 and puts the direct current motor 42 and the battery 44 into the regenerative state.

The controlling device 20 of Embodiment 2 and the controlling device 20 of Embodiment 3 also store Program No. 1 through Program No. 5. Program No. 1 through Program No. 5 are similar to the programs described in Embodiment 1, and thus detailed descriptions thereof will be omitted.

### (Controlling Device of Comparative Examples)

In the meantime, an existing controlling device of Comparative Example 1 and Comparative Example 2 has a control program as indicated in Table 2 stored therein, and regeneration determining values are set in advance in the control program in accordance with the speed of the power-assisted bicycle, the gear ratio, and the treading torque.

**[Table 2]**

| Program No. | Speed (km/h) | Gear Ratio | Treading Torque | Comparative Example 1 | Comparative Example 2 |
|---|---|---|---|---|---|
| 1 | 0 to less than 10 | | | Assisted | Assisted |
| 2 | 10 or greater to less than 24 | | | Assisted | Assisted |
| 3 | 24 or greater | Large | High | × | × |
| 4 | | | Somewhat High | × | × |
| 5 | | | Somewhat Low | × | × |
| 6 | | | Low | Regenerative | Regenerative |
| 7 | | Medium | High | × | × |
| 8 | | | Somewhat High | × | × |
| 9 | | | Somewhat Low | Regenerative | × |
| 10 | | | Low | Regenerative | Regenerative |
| 11 | | Small | High | × | × |
| 12 | | | Somewhat High | Regenerative | × |
| 13 | | | Somewhat Low | Regenerative | × |
| 14 | | | Low | Regenerative | Regenerative |

In Table 2, the controlling device of Comparative Example 1 stores Program No. 1 through Program No. 14. The controlling device of Comparative Example 1 applies Program No. 1 in a case in which the speed of the power-assisted bicycle is at a low speed of 0 to less than 10 km/h and puts the direct current motor and the battery into the assisted state. In a case in which the speed of the power-assisted bicycle is at a medium speed of 10 km/h or greater to less than 24 km/h, the controlling device applies Program No. 2 and puts the direct current motor and the battery into the assisted state.

In addition, in the controlling device of Comparative Example 1, the regeneration determining value for the treading torque is set for each gear ratio while the speed is at a high speed of 24 km/h or greater.

In a case in which the gear ratio is large, the regeneration determining value for the treading torque is set to "low." In other words, in cases in which the treading torque is "high," "somewhat high," and "somewhat low," the controlling device applies Program No. 3, Program No. 4, and Program No. 5, respectively, and puts the direct current motor and the battery into the assisted state. However, since the speed is at a high speed, the controlling device determines that the human power does not need to be assisted, and does not output the assist force. Therefore, the state is indicated by "x" in Table 2. In a case in which the treading torque is "low," the controlling device applies Program No. 6 and puts the direct current motor and the battery into the regenerative state.

In a case in which the gear ratio is medium, the regeneration determining value for the treading torque is set to "somewhat low." In other words, in cases in which the treading torque is "high" and "somewhat high," the controlling device applies Program No. 7 and Program No. 8, respectively, and puts the direct current motor and the battery into the assisted state, but the assist force is not outputted. In cases in which the treading torque is "somewhat low" and "low," the controlling device applies Program No. 9 and Program No. 10, respectively, and puts the direct current motor and the battery into the regenerative state.

In a case in which the gear ratio is small, the regeneration determining value for the treading torque is set to "somewhat high." In other words, in a case in which the treading torque is "high," the controlling device applies Program No. 11, and puts the direct current motor and the battery into the assisted state, but the assist force is not outputted. In cases in which the treading torque is "somewhat high," "somewhat low," and "low," the controlling device applies Program No. 12, Program No. 13, and Program No. 14, respectively, and puts the direct current motor and the battery into the regenerative state.

The controlling device of Comparative Example 2 also stores Program No. 1 through Program No. 14. The controlling device of Comparative Example 2 applies Program No. 1 in a case in which the speed of the power-assisted bicycle is at a low speed of 0 to less than 10 km/h and puts the direct current motor and the battery into the assisted state. In a case in which the speed of the power-assisted bicycle is at a medium speed of 10 km/h or greater to less than 24 km/h, the controlling device applies Program No. 2 and puts the direct current motor and the battery into the assisted state.

Furthermore, in the controlling device of Comparative Example 2, the regeneration determining value for the treading torque is set to "low" regardless of the gear ratio while the speed is at a high speed of 24 km/h or greater.

### (Evaluation of Change in Battery Capacity)

Subsequently, the change in the battery capacity arising when the power-assisted bicycles that include the controlling devices of Embodiments 1 through 3 and the controlling devices of Comparative Examples 1 and 2 have each traveled the path indicated in Table 3 at a predetermined speed has been evaluated.

**[Table 3]**

| Traveling Process | Downhill | Level Ground | Uphill |
|---|---|---|---|
| Speed (km/h) | 24 or greater | 10 or greater to less than 24 | 0 to less than 10 |
| Time (min) | 3 | 30 | 12 |

As indicated in Table 3, the path includes a downhill with a slope of a predetermined degree, a level ground, and an uphill with a slop of a predetermined degree. The power-assisted bicycle has traveled on the downhill for three minutes at the high speed of 24 km/h or greater, has then traveled on the level ground for 30 minutes at the medium speed of 10 km/h or greater to less than 24 km/h, and has further traveled on the uphill for 12 minutes at the low speed of 0 to less than 10 km/h.

Table 4 indicates the evaluation result of the change in the battery capacity in Embodiments 1 through 3.

**[Table 4]**

| Traveling Process | | Downhill | | Level Ground | | Uphill | Total Amount of Change in Battery (Ah) | Ratio of Regeneration Duration (%) |
|---|---|---|---|---|---|---|---|---|
| Speed (km/h) | | 24 or greater | | 10 or greater to less than 24 | | 0 to less than 10 | | |
| Embodiment 1 | Time (min) | 1.5 | 1.5 | 5 | 25 | 12 | -0.82 | 14 |
| | Program | 5 | 4 | 3 | 2 | 1 | | |
| | Change in Battery Capacity Per Unit Time | 0.04 | 0 | 0.02 | -0.02 | -0.04 | | |
| | (Ah/min.) | | | | | | | |
| | Amount of Change in Battery Capacity (Ah) | 0.06 | 0 | 0.1 | -0.5 | -0.48 | | |
| Embodiment 2 | Time | 2 | 1 | 6 | 24 | 12 | -0.76 | 18 |
| | Program | 5 | 4 | 3 | 2 | 1 | | |
| | Change in Battery Capacity Per Unit Time | 0.04 | 0 | 0.02 | -0.02 | -0.04 | | |
| | (Ah/min.) | | | | | | | |
| | Amount of Change in Battery Capacity (Ah) | 0.08 | 0 | 0.12 | -0.48 | -0.48 | | |
| Embodiment 3 | Time | 3 | 0 | 24 | 6 | 12 | 0 | 60 |
| | Program | 5 | 4 | 3 | 2 | 1 | | |
| | Change in Battery Capacity Per Unit Time | 0.04 | 0 | 0.02 | -0.02 | -0.04 | | |
| | (Ah/min.) | | | | | | | |
| | Amount of Change in Battery Capacity (Ah) | 0.12 | 0 | 0.48 | -0.12 | -0.48 | | |

| | | | | | | | | |
|---|---|---|---|---|---|---|---|---|
| *Change in battery capacity > 0 indicates the regenerative state, and < 0 indicates the assisted state. | | | | | | | | |

In Table 4, while the power-assisted bicycle 1 was traveling on the downhill for three minutes at the high speed of 24 km/h or greater, the controlling device 20 of Embodiment 1 applied Program No. 5 (the regenerative state) for 1.5 minutes and applied Program No. 4 (the assisted state but the assist force is not outputted) for the remaining 1.5 minutes. When Program No. 5 was applied, the change in the battery capacity per unit time was 0.04 Ah/min; the amount of change in the battery capacity was 0.06 Ah; and the electric power was regenerated in the battery 44. When Program No. 4 was applied, the change in the battery capacity per unit time was 0 Ah/min; the amount of change in the battery capacity was 0 Ah; and the electric power capacity in the battery 44 did not change.

Subsequently, while the power-assisted bicycle 1 was traveling on the level ground for 30 minutes at the medium speed of 10 km/h or greater to less than 24 km/h, the controlling device 20 of Embodiment 1 applied Program No. 3 (the regenerative state) for five minutes and applied Program No. 2 (the assisted state) for the remaining 25 minutes. When Program No. 3 was applied, the change in the battery capacity per unit time was 0.02 Ah/min; the amount of change in the battery capacity was 0.1 Ah; and the electric power was regenerated in the battery 44. When Program No. 2 was applied, the change in the battery capacity per unit time was -0.02 Ah/min; the amount of change in the battery capacity was -0.5 Ah; and the electric power in the battery 44 was consumed.

Furthermore, while the power-assisted bicycle 1 was traveling on the uphill for 12 minutes at the low speed of 0 to less than 10 km/h, the controlling device 20 of Embodiment 1 applied Program No. 1 (the assisted state). In this case, the change in the battery capacity per unit time was -0.04 Ah/min; the amount of change in the battery capacity was -0.48 Ah; and the electric power in the battery 44 was consumed.

As a result, the total amount of change in the battery along the entire traveling route was 0.06 + 0 + 0.1 + (-0.5) + (-0.48) = -0.82 Ah, and the ratio of the duration of the regenerative state was 14% of the total duration (45 minutes) obtained by adding the duration of the assisted state (1.5 minutes + 25 minutes + 12 minutes) and the duration of the regenerative state (1.5 minutes + 5 minutes).

In the meantime, while the power-assisted bicycle 1 was traveling on the downhill for three minutes at the high speed of 24 km/h or greater, the controlling device 20 of Embodiment 2 applied Program No. 5 (the regenerative state) for two minutes and applied Program No. 4 (the assisted state but the assist force is not outputted) for the remaining one minute. When Program No. 5 was applied, the change in the battery capacity per unit time was 0.04 Ah/min; the amount of change in the battery capacity was 0.08 Ah; and the electric power was regenerated in the battery 44. When Program No. 4 was applied, the change in the battery capacity per unit time was 0 Ah/min; the amount of change in the battery capacity was 0 Ah; and the electric power capacity in the battery 44 did not change.

Subsequently, while the power-assisted bicycle 1 was traveling on the level ground for 30 minutes at the medium speed of 10 km/h or greater to less than 24 km/h, the controlling device 20 of Embodiment 2 applied Program No. 3 (the regenerative state) for six minutes and applied Program No. 2 (the assisted state) for the remaining 24 minutes. When Program No. 3 was applied, the change in the battery capacity per unit time was 0.02 Ah/min; the amount of change in the battery capacity was 0.12 Ah; and the electric power was regenerated in the battery 44. When Program No. 2 was applied, the change in the battery capacity per unit time was -0.02 Ah/min; the amount of change in the battery capacity was -0.48 Ah; and the electric power in the battery 44 was consumed.

Furthermore, while the power-assisted bicycle 1 was traveling on the uphill for 12 minutes at the low speed of 0 to less than 10 km/h, the controlling device 20 of Embodiment 2 applied Program No. 1 (the assisted state). In this case, the change in the battery capacity per unit time was -0.04 Ah/min, the amount of change in the battery capacity was -0.48 Ah, and the electric power in the battery 44 was consumed.

As a result, the total amount of change in the battery along the entire traveling route was 0.08 + 0 + 0.12 + (-0.48) + (-0.48) = -0.76 Ah, and the ratio of the duration of the regenerative state was 18% of the total duration (45 minutes) obtained by adding the duration of the assisted state (1 minute + 24 minutes + 12 minutes) and the duration of the regenerative state (2 minutes + 6 minutes).

Meanwhile, while the power-assisted bicycle 1 was traveling on the downhill for three minutes at the high speed of 24 km/h or greater, the controlling device 20 of Embodiment 3 applied Program No. 5 (the regenerative state), and did not apply Program No. 4. In this case, the change in the battery capacity per unit time was 0.04 Ah/min; the amount of change in the battery capacity was 0.12 Ah; and the electric power was regenerated in the battery 44.

Subsequently, while the power-assisted bicycle 1 was traveling on the level ground for 30 minutes at the medium speed of 10 km/h or greater to less than 24 km/h, the controlling device 20 of Embodiment 3 applied Program No. 3 (the regenerative state) for 24 minutes and applied Program No. 2 (the assisted state) for the remaining six minutes. When Program No. 3 was applied, the change in the battery capacity per unit time was 0.02 Ah/min; the amount of change in the battery capacity was 0.48 Ah; and the electric power was regenerated in the battery 44. When Program No. 2 was applied, the change in the battery capacity per unit time was -0.02 Ah/min; the amount of change in the battery capacity was -0.12 Ah; and the electric power in the battery 44 was consumed.

Furthermore, while the power-assisted bicycle 1 was traveling on the uphill for 12 minutes at the low speed of 0 to less than 10 km/h, the controlling device 20 of Embodiment 3 applied Program No. 1 (the assisted state). In this case, the change in the battery capacity per unit time was -0.04 Ah/min; the amount of change in the battery capacity was -0.48 Ah; and the electric power in the battery 44 was consumed.

As a result, the total amount of change in the battery along the entire traveling route was 0.12 + 0.48 + (-0.12) + (-0.48) = 0 Ah, and the ratio of the duration of the regenerative state was 60% of the total duration (45 minutes) obtained by adding the duration of the assisted state (6 minutes + 12 minutes) and the duration of the regenerative state (3 minutes + 24 minutes).

Table 5 indicates the evaluation result of the change in the battery capacity in Comparative Examples 1 and 2.

**[Table 5]**

| Traveling Process | | Downhill | | Level Ground | | Uphill | Total Amount of Change in Battery (Ah) | Ratio of Regenerati on Duration (%) |
|---|---|---|---|---|---|---|---|---|
| Speed (km/h) | | 24 or greater | | 10 or greater to less than 24 | | 0 to less than 10 | | |
| Comparative Example 1 | Time | 0.5 | 2.5 | | 30 | 12 | -1.06 | 1 |
| | Program | 6, 9, 12 | 5, 8, 11 | | 2 | 1 | | |
| | Change in Battery Capacity Per Unit Time (Ah/min.) | 0.04 | 0 | | -0.02 | -0.04 | | |
| | Amount of Change in Battery Capacity (Ah) | 0.02 | 0 | 0 | -0.6 | -0.48 | | |
| Comparative Example 2 | Time | 0.1 | 2.9 | | 30 | 12 | -1.076 | 0.2 |
| | Program | 6 | 5,8, 11,9, 12 | | 2 | 1 | | |
| | Change in Battery Capacity Per Unit Time (Ah/min.) | 0.04 | 0 | | -0.02 | -0.04 | | |
| | Amount of Change in Battery Capacity (Ah) | 0.004 | 0 | 0 | -0.6 | -0.48 | | |

| | | | | | | | | |
|---|---|---|---|---|---|---|---|---|
| *Change in battery capacity > 0 indicates the regenerative state, and < 0 indicates the assisted state. | | | | | | | | |

In Table 5, while the power-assisted bicycle was traveling on the downhill for three minutes at the high speed of 24 km/h or greater, the controlling device of Comparative Example 1 applied Programs No. 6, 9, and 12 (the regenerative state) for 0.5 minute and applied Programs No. 5, 8, and 11 (the assisted state but the assist force is not outputted) for the remaining 2.5 minutes. When Programs No. 6, 9, and 12 were applied, the change in the battery capacity per unit time was 0.04 Ah/min; the amount of change in the battery capacity was 0.02 Ah; and the electric power was regenerated in the battery. When Programs No. 5, 8, and 11 were applied, the change in the battery capacity per unit time was 0 Ah/min; the amount of change in the battery capacity was 0 Ah; and the electric power capacity in the battery did not change.

Subsequently, while the power-assisted bicycle was traveling on the level ground for 30 minutes at the medium speed of 10 km/h or greater to less than 24 km/h, the controlling device of Comparative Example 1 applied Program No. 2 (the assisted state). In this case, the change in the battery capacity per unit time was - 0.02 Ah/min; the amount of change in the battery capacity was -0.6 Ah; and the electric power in the battery was consumed.

Furthermore, while the power-assisted bicycle was traveling on the uphill for 12 minutes at the low speed of 0 to less than 10 km/h, the controlling device of Comparative Example 1 applied Program No. 1 (the assisted state). In this case, the change in the battery capacity per unit time was -0.04 Ah/min; the amount of change in the battery capacity was -0.48 Ah; and the electric power in the battery was consumed.

As a result, the total amount of change in the battery along the entire traveling route was 0.02 + 0 + (-0.6) + (-0.48) = -1.06 Ah, and the ratio of the duration of the regenerative state was 1% of the total duration (45 minutes) obtained by adding the duration of the assisted state (2.5 minutes + 30 minutes + 12 minutes) and the duration of the regenerative state (0.5 minute).

In the meantime, while the power-assisted bicycle was traveling on the downhill for three minutes at the high speed of 24 km/h or greater, the controlling device of Comparative Example 2 applied Program No. 6 (the regenerative state) for 0.1 minute and applied Programs No. 5, 8, and 11 (the assisted state but the assist force is not outputted) for the remaining 2.9 minutes. When Program No. 6 was applied, the change in the battery capacity per unit time was 0.04 Ah/min; the amount of change in the battery capacity was 0.004 Ah; and the electric power was regenerated in the battery. When Programs No. 5, 8, and 11 were applied, the change in the battery capacity per unit time was 0 Ah/min; the amount of change in the battery capacity was 0 Ah; and the electric power capacity in the battery did not change.

Subsequently, while the power-assisted bicycle was traveling on the level ground for 30 minutes at the medium speed of 10 km/h or greater to less than 24 km/h, the controlling device of Comparative Example 2 applied Program No. 2 (the assisted state). In this case, the change in the battery capacity per unit time was - 0.02 Ah/min; the amount of change in the battery capacity was -0.6 Ah; and the electric power in the battery was consumed.

Furthermore, while the power-assisted bicycle was traveling on the uphill for 12 minutes at the low speed of 0 to less than 10 km/h, the controlling device of Comparative Example 2 applied Program No. 1 (the assisted state). In this case, the change in the battery capacity per unit time was -0.04 Ah/min; the amount of change in the battery capacity was -0.48 Ah; and the electric power in the battery was consumed.

As a result, the total amount of change in the battery along the entire traveling route was 0.004 + 0 + (-0.6) + (-0.48) = -1.076 Ah, and the ratio of the duration of the regenerative state was 0.2% of the total duration (45 minutes) obtained by adding the duration of the assisted state (2.9 minutes + 30 minutes + 12 minutes) and the duration of the regenerative state (0.1 minute).

On the basis of Table 4 and Table 5 above, it was recognized that Embodiments 1 through 3, in which the assisted state and the regenerative state were switched in accordance with the speed and the acceleration, reduced the amount of battery consumption as compared to Comparative Examples 1 and 2, in which the assisted state and the regenerative state were switched in accordance with the speed, the gear ratio, and the treading torque.

In addition, while Embodiments 1 through 3 employ a simple program with two variables, the speed and the acceleration, the regeneration determining value is determined for each gear in Comparative Example 1, and the program thus becomes complicated. It is to be noted that as the number of gears increases, the program becomes more complicated in accordance with the increase. Although the regeneration determining value is not set for each gear in Comparative Example 2 and the program is thus somewhat simplified, the frequency of switching to the regenerative state decreases, which in turn increases the amount of battery consumption.

Furthermore, with Embodiment 3, as the regeneration determining value for the acceleration is set such that the ratio of the regeneration duration in the entire traveling process becomes 60% or higher, the amount of change in the battery capacity becomes 0 Ah or greater, and it is thus recognized that the power-assisted bicycle can be used without charging.

It is to be noted that a case in which the direct current motor 42 and the batter 44 do not enter the regenerative state on the uphill has been illustrated as an example in Embodiment 1 through Embodiment 3. However, depending on the condition of the rider of the power-assisted bicycle 1 or on the setting of the regeneration determining value for the acceleration, there is a case in which the direct current motor 42 and the battery 44 enter the regenerative state on the uphill. In such a case, the amount of battery consumption can be further reduced.

### 2. Embodiment 4

The controller 22 of the controlling device 20 according to Embodiment 4 has a control program as indicated in Table 6 stored therein, and regeneration determining values for the acceleration of the power-assisted bicycle 1 are set in advance in the control program in accordance with the speed of the power-assisted bicycle 1.

**[Table 6]**

| Program No. | Speed (km/h) | Acceleration (m/s²) | | State |
|---|---|---|---|---|
| | | Concept | Embodiment 4 | |
| 1 | 0 to less than 10 | * | * | Assisted |
| 2 | 10 or greater to less than 15 | +○ (Positive Threshold Value) | Less than +0.5 | Assisted |
| 3 | | | +0.5 or greater | Regenerative |
| 4 | 15 or greater to less than 24 | +Δ (Positive Threshold Value) | Less than -1 | × |
| 5 | | | -1 or greater | Regenerative |
| 6 | 24 or greater | +□ (Positive Threshold Value) | Less than -2 | × |
| 7 | | | -2 or greater | Regenerative |

The control program in the controlling device 20 of Embodiment 4 differs from the program in the controlling device 20 of Embodiment 1 through Embodiment 3 described above. Specifically, the control program includes a first speed range in which the speed of the power-assisted bicycle 1 ranges from 0 km/h or greater to a first threshold speed, a second speed range that ranges from the first threshold speed to a second threshold speed, and a third speed range that exceeds the second threshold speed, and the second speed range is divided into two ranges, namely, a low speed range and a high speed range.

In Embodiment 4, the first threshold speed is set to 10 km/h, and the second threshold speed is set to 24 km/h. In addition, in Embodiment 4, the second speed range is divided into the low speed range and the high speed range at the speed of 15 km/h. Here, it is preferable that the first threshold speed be in a range from 9 km/h to 11 km/h and that the second threshold speed be in a range from 22 km/h to 24 km.

The controller 22 stores, in advance, a first regeneration determining value having a positive threshold value (indicated conceptually by "+○" in Table 6) for the acceleration of the power-assisted bicycle 1 within the low speed range (10 km/h or greater to less than 15 km/h) of the second speed range. In addition, the controller 22 stores, in advance, a second regeneration determining value having a negative threshold value (indicated conceptually by "-Δ" in Table 6) for the acceleration of the power-assisted bicycle 1 within the high speed range (15 km/h or greater to less than 24 km/h) of the second speed range. Furthermore, the controller 22 stores, in advance, a third regeneration determining value having a negative threshold value (indicated conceptually by "-□" in Table 6) for the acceleration of the power-assisted bicycle 1 within the third speed range in which the speed of the power-assisted bicycle 1 is 24 km/h or greater. Here, the charging efficiency of the battery 44 is higher when the negative threshold value ("-Δ") of the second regeneration determining value is greater than the negative threshold value ("-□") of the third regeneration determining value.

The controller 22 of Embodiment 4 stores Program No. 1 through Program No. 7. In a case in which the speed of the power-assisted bicycle 1 is in the first speed range that ranges from 0 to less than 10 km/h, the controlling device 20 of Embodiment 4 applies Program No. 1 and puts the direct current motor 42 and the battery 44 into the assisted state regardless of the acceleration.

In addition, in the controlling device 20 of Embodiment 4, the first regeneration determining value for the acceleration is set to +0.5 m/s² while the speed is in the low speed range of the second speed range that ranges from 10 km/h or greater to less than 15 km/h. In other words, in a case in which the acceleration is less than +0.5 m/s², the controlling device 20 of Embodiment 4 determines that the power-assisted bicycle 1 is traveling on the uphill and the rider does not have enough stamina left, and thus applies Program No. 2 so as to put the direct current motor 42 and the battery 44 into the assisted state. In a case in which the acceleration is +0.5 m/s² or greater, the controlling device 20 of Embodiment 4 determines that the power-assisted bicycle 1 is starting or is traveling on the level ground and the rider has enough stamina left, and thus applies Program No. 3 so as to put the direct current motor 42 and the battery 44 into the regenerative state.

Furthermore, in the controlling device 20 of Embodiment 4, the second regeneration determining value for the acceleration is set to -1 m/s² while the speed is in the high speed range of the second speed range that ranges from 15 km/h or greater to less than 24 km/h. In other words, in a case in which the acceleration is less than -1 m/s², the controlling device 20 of Embodiment 4 applies Program No. 4 and puts the direct current motor 42 and the battery 44 into the neutral state (indicated by "x" in Table 6). In a case in which the acceleration is -1 m/s² or greater, the controlling device 20 determines that the rider has enough stamina left, and applies Program No. 5 so as to put the direct current motor 42 and the battery 44 into the regenerative state. Through this setting, the frequency of the direct current motor 42 and the battery 44 entering the regenerative state can be increased.

Furthermore, in the controlling device 20 of Embodiment 4, the third regeneration determining value for the acceleration is set to -2 m/s² while the speed is in the third speed range that ranges from 24 km/h and greater. In other words, in a case in which the acceleration is less than -2 m/s², the controlling device 20 of Embodiment 4 applies Program No. 6 and puts the direct current motor 42 and the battery 44 into the neutral state. In a case in which the acceleration is -1 m/s² or greater, the controlling device 20 of Embodiment 4 determines that the power-assisted bicycle 1 is traveling on the downhill and the rider has enough stamina left, and applies Program No. 7 so as to put the direct current motor 42 and the battery 44 into the regenerative state.

As described thus far, the controlling device 20 of Embodiment 4 sets the first regeneration determining value having a positive threshold value for the acceleration of the power-assisted bicycle 1 while the speed is less than 15 km/h to thus assist the rider of the power-assisted bicycle 1 traveling on the uphill. Meanwhile, when the speed is 15 km/h or greater, the controlling device 20 sets the second and third regeneration determining values each having a negative threshold value for the acceleration of the power-assisted bicycle 1 to thus increase the frequency of the direct current motor 42 and the battery 44 entering the regenerative state.

It is to be noted that, while the second speed range is divided into two ranges, namely, the low speed range and the high speed range at the speed of 15 km/h in the controlling device 20 of Embodiment 4, it is preferable that this value set for dividing the second speed range into two ranges can be changed in accordance with the user of the power-assisted bicycle 1. For example, if a speed that is less than 15 km/h is set, the duration of the assisted state decreases, and the duration of the regenerative state increased. In other words, the value set for dividing the second speed range into two ranges serves as a reference for determining whether or not to enter the assisted state.

In addition, a typical power-assisted bicycle uses a battery having an upper limit rated value of a current value per cell of 6.3 A with a priority placed on the energy density in order to extend battery life. However, a current of at least 15 A is required on the uphill, which exceeds the upper limit rated value to be obtained with only the stated single battery cell, and thus the battery is formed by connecting three of the aforementioned cells in parallel so as to be compatible with a maximum current of 18.9 A. In the meantime, with the power-assisted bicycle that switches between the assisted state and the regenerative state while traveling as in the present application, it is not a problem even if the battery life is somewhat short, and thus a battery having the upper limit rated value of a current value per cell of 15 A with a priority placed on power density can be used. By using such a battery having an upper limit rated value per cell of 15 A, the size and the cost of the battery can be reduced by two thirds as compared to the existing technique. In addition, even in a case in which the upper limit rated value of a battery is made to be equivalent to the upper limit rated value of 18.9 A at a maximum provided in a typical power-assisted bicycle, by using a battery having an upper limit rated value of 15 A, it is sufficient to connect only two cells in parallel, and thus the size and the cost of the battery can be reduced by one third as compared to the existing technique.

In addition, the controlling device for the power-assisted mobile apparatus according to the present embodiment is provided with a sensor, although not illustrated, for detecting the treading torque in order to control the assist force.

It is to be noted that the present invention is not limited to the embodiments described above, and various modifications can be made within the spirit of the invention.

### Reference Signs List

- 1: POWER-ASSISTED BICYCLE
- 4: AUXILIARY POWER UNIT
- 20: CONTROLLING DEVICE
- 22: CONTROLLER
- 26: SPEED SENSOR
- 27: ACCELERATION SENSOR
- 28: DRIVER
- 30: ASSIST SWITCH
- 32: REGENERATIVE SWITCH
- 34: BOOSTER CIRCUIT
- 36: COUNTERCURRENT PREVENTION DIODE
- 42: DIRECT CURRENT MOTOR
- 44: BATTERY

## Claims

1. A controlling device for a power-assisted mobile apparatus that includes a motor and a battery for generating assist force, the controlling device comprising:
an acceleration detecting unit configured to detect acceleration of the power-assisted mobile apparatus; and
a regeneration controlling unit configured to switch a state of the motor and the battery to one of an assisted state, a regenerative state, and a neutral state on the basis of the acceleration detected by the acceleration detecting unit,
wherein the regeneration controlling unit switches the state of the motor and the battery to the regenerative state in a case in which the acceleration detected by the acceleration detecting unit is equal to or greater than the regeneration determining value.

2. The controlling device for the power-assisted mobile apparatus according to claim 1, further comprising:
a speed detecting unit configured to detect a speed of the power-assisted mobile apparatus,
wherein the regeneration controlling unit has a regeneration determining value for the acceleration of the power-assisted mobile apparatus stored in advance in accordance with the speed of the power-assisted mobile apparatus, and switches the state of the motor and the battery to the regenerative state in a case in which the acceleration detected by the acceleration detecting unit at a given speed is equal to or greater than the regeneration determining value.

3. A controlling device for a power-assisted mobile apparatus that includes a motor and a battery for generating assist force, the controlling device comprising:
a speed detecting unit configured to detect a speed of the power-assisted mobile apparatus;
an acceleration detecting unit configured to detect acceleration of the power-assisted mobile apparatus; and
a regeneration controlling unit configured to switch a state of the motor and the battery to one of an assisted state, a regenerative state, and a neutral state on the basis of the speed detected by the speed detecting unit and the acceleration detected by the acceleration detecting unit,
wherein the regeneration controlling unit has a regeneration determining value for the acceleration of the power-assisted mobile apparatus stored in advance in accordance with the speed of the power-assisted mobile apparatus, and switches the state of the motor and the battery to the regenerative state in a case in which the acceleration detected by the acceleration detecting unit at a given speed is equal to or greater than the regeneration determining value.

4. The controlling device for the power-assisted mobile apparatus according to any one of claim 1 through claim 3,
wherein the speed of the power-assisted mobile apparatus includes a first speed range that ranges from at least 0 km/h to a first threshold speed, a second speed range that ranges from the first threshold speed to a second threshold speed, and a third speed range that exceeds the second threshold speed, the second speed range being divided into two ranges of a low speed range and a high speed range,
wherein the regeneration controlling unit has a first regeneration determining value having a positive threshold value for the acceleration of the power-assisted mobile apparatus stored in advance for the low speed range of the power-assisted mobile apparatus, switches the state of the motor and the battery to the regenerative state in a case in which the acceleration detected by the acceleration detecting unit at a speed in the low speed range is equal to or greater than the first regeneration determining value, and switches the state of the motor and the battery to the assisted state in a case in which the acceleration is less than the first regeneration determining value, and
wherein the regeneration controlling unit has a second regeneration determining value having a negative positive threshold value for the acceleration of the power-assisted mobile apparatus stored in advance for the high speed range of the power-assisted mobile apparatus, switches the state of the motor and the battery to the regenerative state in a case in which the acceleration detected by the acceleration detecting unit at a speed in the high speed range is equal to or greater than the second regeneration determining value, and switches the state of the motor and the battery to the neutral state in a case in which the acceleration is less than the second regeneration determining value.

5. The controlling device for the power-assisted mobile apparatus according to any one of claim 1 through claim 4,
wherein the regeneration determining value can be set such that a total amount of change in the battery along an entire traveling process is equal to or greater than 0.

6. The controlling device for the power-assisted mobile apparatus according to any one of claim 1 through claim 5,
wherein the battery of the power-assisted mobile apparatus is provided with a battery cell having an output current of 15 A or greater.

7. A power-assisted mobile apparatus, comprising:
the controlling device for the power-assisted mobile apparatus according to any one of claim 1 through claim 6.
